# EUROPEAN PATENT APPLICATION

(11) **EP 2 853 561 A1**
(43) Date of publication of application: **01.04.2015**
(21) Application number: 13186551.1
(22) Date of filing: 27.09.2013
(51) Int. Cl.: C08K 5/527, C08L 69/00, C08K 5/13

(54) **Color stable polycarbonate with long lifetime**

(71) Applicant: SABIC Innovative Plastics IP B.V., 4612 PX Bergen op Zoom (NL)
(72) Inventor: Sharifi, Payman, 30390 La Aljorra, Cartagena (ES)
(74) Representative: Stiebe, Lars Magnus

(57) **Abstract**

A polycarbonate composition is disclosed that maintains its color and transparency for long time periods. The composition comprises a polycarbonate polymer formed by a melt process; and a pentaerythritol diphosphite stabilizer; and optionally a phenolic antioxidant. Articles made from the polycarbonate composition are suitable for materials with high thicknesses and high transparency.

## Description

### BACKGROUND

The present disclosure relates to polycarbonate compositions made by melt processing/polymerization that can be used to make articles that maintain their transparency even at high thicknesses, and maintain their optical properties over a long period of time. Such compositions and articles can be useful for various applications, for example for forming lenses, and optical devices, among others.

Polycarbonates (PC) are synthetic engineering thermoplastic resins, and are a useful class of polymers having many beneficial properties. With their mechanical strength and optical clarity, polycarbonate resins offer many significant advantages and are used for a number of different commercial applications. Their high impact resistance can make polycarbonate an important component in numerous consumer goods such as mobile phones, MP3 players, computers, laptops, etc. Due to its transparency, Bisphenol-A (BPA) polycarbonates can find use in optical media, automotive lenses, roofing elements, greenhouses, photovoltaic devices, and safety glass.

In certain applications, especially those where the object thickness and hence the light path have considerable length, the requirements of low color and high transparency are more appreciated. Examples of such applications include thick lenses such as found in automotive lighting inner lenses, collimator lenses, light emitting diode (LED) lenses, and lightguides. Next to that, such applications also demand that the optical properties are retained over a long time. This is especially true for applications with LED light sources which are guaranteed to have a long lifetime.

Polycarbonates can be produced by melt processing or by interfacial processing. The polycarbonates produced by the melt process have properties and structural features which are different from polycarbonates made by the phosgene process. For example, polycarbonates produced by the melt process can have a melt volume rate (MVR) of 3 to 56 cc/10 min, an endcap content of 65% to 90%, and a Fries content of 300 ppm to 2750 ppm. In contrast, polycarbonates produced by interfacial processing will have an endcap content of 90% to 96%, and a Fries content of less than 200 ppm. Interfacial processing also requires the use of phosgene, which is a toxic gas.

It would be desirable to produce a polycarbonate by the melt process which allows for molding or extrusion of objects with a low color and high light transmission that also retain these properties for a long time at a high temperature.

### BRIEF DESCRIPTION

Disclosed herein are polycarbonates produced by melt processing/polymerization that are color stable and have longer lifetimes. The polycarbonate compounds of the present disclosure are made by a melt process and include a pentaerythritol diphosphite stabilizer, and optionally include a phenolic antioxidant. Also disclosed are articles produced using the polycarbonate compounds.

In this regard, disclosed herein in various embodiments is a polycarbonate composition comprising a polycarbonate polymer formed by melt processing and a pentaerythritol diphosphite stabilizer. The composition has a yellowness index (YI) of 3 or less when measured according to ASTM D1925 at 2.5 mm thickness; a light transmission of 90% or greater when measured according to ASTM D1003 at 2.5 mm thickness; a melt volume rate of from 3 to 56 cc/10 min, when measured according to ASTM D1238; an endcap percentage of 65% to 90%; and a Fries content of from 200 ppm to 2750 ppm.

In some embodiments, the pentaerythritol diphosphite stabilizer is bis (2,4-dicumyl) pentaerythritol diphosphite.

In other additional embodiments, the polycarbonate composition further comprises a phenolic antioxidant.

In some embodiments, the phenolic antioxidant is octadecyl 3-(3,5-di-tert-butyl-4-hydroxyphenyl)propionate, 1,3,5-tris(4-tert-butyl-3-hydroxy-2,6-dimethylbenzyl)-1,3,5-triazine-2,4,6-(1H,3H,5H)-trione, or bis[3,3-bis-(4'-hydroxy-3'-tert-butylphenyl) butanoic acid]-glycol ester,.

In various embodiments, the polycarbonate composition contains from 50 ppm to 1000 ppm of the phenolic antioxidant.

In some embodiments, the weight ratio of the pentaerythritol diphosphite stabilizer to the phenolic antioxidant is from 1:1 to 6:1.

In further embodiments, the polycarbonate composition has a YI of 2.5 or less.

In additional embodiments, the polycarbonate composition contains from 25 ppm to 1000 ppm of the pentaerythritol diphosphite stabilizer.

In some embodiments, the yellowness index remains below 10 after being baked at 250°C for a period of 60 minutes. In various other embodiments, the yellowness index increases by less than 100% after being baked at 250°C for a period of 60 minutes. In additional embodiments, the yellowness index increases by less than 200% after being baked at 250°C for a period of 120 minutes.

In further embodiments, an article may be molded from the polycarbonate composition. In other embodiments, the article is an automotive inner lens, a collimator lens, an LED lens, or a light guide.

These and other non-limiting aspects of the present disclosure are more particularly described below.

### BRIEF DESCRIPTION OF THE DRAWINGS

The following is a brief description of the drawings, which are presented for the purposes of illustrating the exemplary embodiments disclosed herein and not for the purposes of limiting the same.

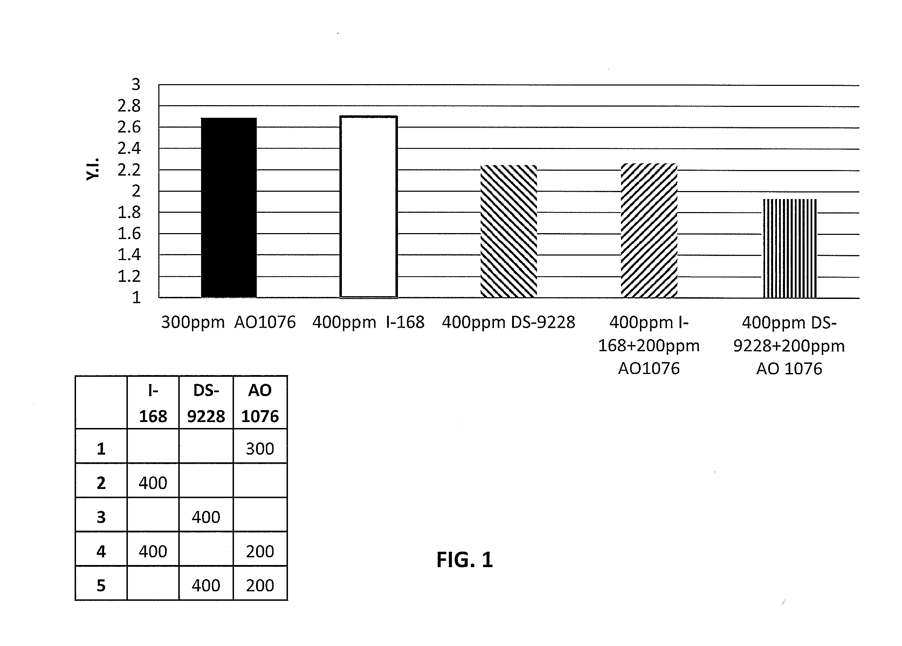

**FIG. 1** is a graph of YI (Yellowness Index) versus ppm concentrations of the following mixtures: (1) phenolic antioxidant 1076 (AO1076), (2) phosphite Irgaphos 168 (I-168), (3) diphosphite Doverphos S-9228 (DS-9228), (4) a combination of I-168 and AO1076, and (5) a combination of DS-9228 and A01076.

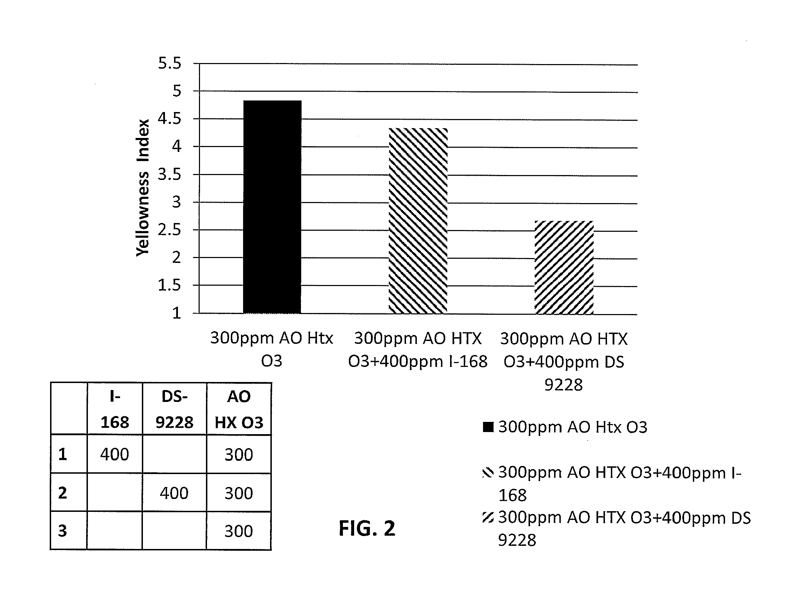

**FIG. 2** is a graph of YI (Yellowness Index) versus ppm concentrations of the following mixtures: (1) phenolic antioxidant Hostanox 03 (AO Htx 03), (2) a combination of phosphite I-168 and AO Htx 03, and (3) a combination of diphosphate DS-0228 and AO Htx 03.

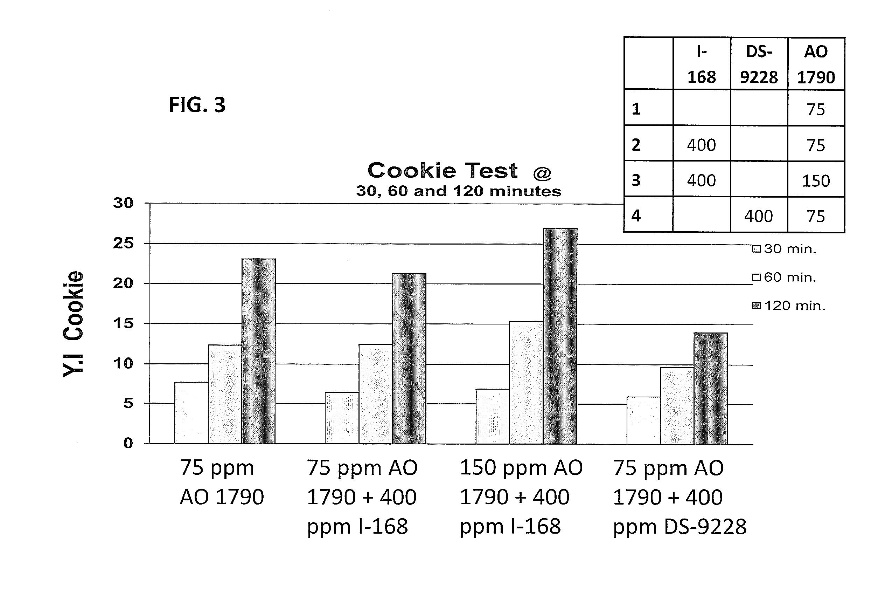

**FIG. 3** is a graph of a cookie test performed by baking polymer on a tray at 250°C for 30 minutes, 60 minutes, and 120 minutes. The YI (Yellowness Index) is measured versus ppm concentrations of the following mixtures: (1) 75 ppm phenolic antioxidant Songnox 1790 (AO 1790), (2) a combination of phosphite I-168 at 400 ppm and phenolic AO 1790 at 75 ppm, (3) a combination of phosphite I-168 at 400 ppm and phenolic AO 1790 at 150 ppm, and (4) a combination of 400 ppm diphosphite DS-9228 and 75 ppm phenolic AO 1790.

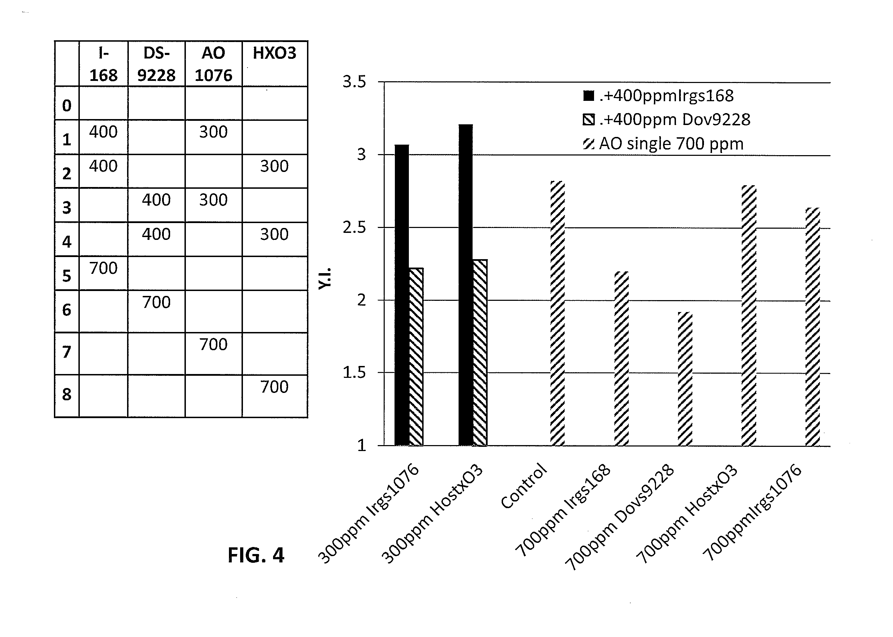

**FIG. 4** is a graph comparing the YI (Yellowness Index) of various combinations of a phosphite (I-168) or disphosphate (DS-9228) with different phenolic antioxidants (AOs). YI is measured versus ppm concentrations for (1) 400 ppm phosphite I-168 and 300 ppm phenolic AO 1076, (2) 400 ppm phosphite I-168 and 300 ppm phenolic Hx 03, (3) 400 ppm diphosphite DS-9228 and 300 ppm phenolic AO1076, (4) 400 ppm diphosphate DS-9228 and 300 ppm phenolic AO Hx 03, (0) a control with no phenol or phosphite added, (5) 700 ppm phosphite I-168, (6) 700 ppm diphosphite DS-9228, (7) 700 ppm phenolic AO 1076, and (8) 700 ppm phenolic AO Hx 03.

### DETAILED DESCRIPTION

The present disclosure may be understood more readily by reference to the following detailed description of desired embodiments and the examples included therein. In the following specification and the claims which follow, reference will be made to a number of terms which shall be defined to have the following meanings.

The singular forms "a," "an," and "the" include plural referents unless the context clearly dictates otherwise.

As used in the specification and in the claims, the term "comprising" may include the embodiments "consisting of" and "consisting essentially of."

Numerical values in the specification and claims of this application, particularly as they relate to polymers or polymer compositions, reflect average values for a composition that may contain individual polymers of different characteristics. Furthermore, unless indicated to the contrary, the numerical values should be understood to include numerical values which are the same when reduced to the same number of significant figures and numerical values which differ from the stated value by less than the experimental error of conventional measurement technique of the type described in the present application to determine the value.

All ranges disclosed herein are inclusive of the recited endpoint and independently combinable (for example, the range of "from 2 grams to 10 grams" is inclusive of the endpoints, 2 grams and 10 grams, and all the intermediate values).

As used herein, approximating language may be applied to modify any quantitative representation that may vary without resulting in a change in the basic function to which it is related. Accordingly, a value modified by a term or terms, such as "about" and "substantially," may not be limited to the precise value specified. The modifier "about" should also be considered as disclosing the range defined by the absolute values of the two endpoints. For example, the expression "from about 2 to about 4" also discloses the range "from 2 to 4."

It should be noted that weight percentage or "wt%", is based on the total weight of the polymeric composition.

Compounds are described using standard nomenclature. For example, any position not substituted by any indicated group is understood to have its valency filled by a bond as indicated, or a hydrogen atom. A dash ("-") that is not between two letters or symbols is used to indicate a point of attachment for a substituent. For example, the aldehyde group -CHO is attached through the carbon of the carbonyl group.

The term "aliphatic" refers to a linear or branched array of atoms that is not cyclic and has a valence of at least one. Aliphatic groups are defined to comprise at least one carbon atom. The array of atoms may include heteroatoms such as nitrogen, sulfur, silicon, selenium and oxygen in the backbone or may be composed exclusively of carbon and hydrogen. Aliphatic groups may be substituted or unsubstituted. Exemplary aliphatic groups include, but are not limited to, methyl, ethyl, isopropyl, isobutyl, hydroxymethyl (-CH₂OH), mercaptomethyl (-CH₂SH), methoxy, methoxycarbonyl (CH₃OCO-), nitromethyl (-CH₂NO₂), and thiocarbonyl.

The term "alkyl" refers to a linear or branched array of atoms that is composed exclusively of carbon and hydrogen. The array of atoms may include single bonds, double bonds, or triple bonds (typically referred to as alkane, alkene, or alkyne). Alkyl groups may be substituted (i.e. one or more hydrogen atoms is replaced) or unsubstituted. Exemplary alkyl groups include, but are not limited to, methyl, ethyl, and isopropyl. It should be noted that alkyl is a subset of aliphatic.

The term "aromatic" refers to an array of atoms having a valence of at least one and comprising at least one aromatic group. The array of atoms may include heteroatoms such as nitrogen, sulfur, selenium, silicon and oxygen, or may be composed exclusively of carbon and hydrogen. Aromatic groups are not substituted. Exemplary aromatic groups include, but are not limited to, phenyl, pyridyl, furanyl, thienyl, naphthyl and biphenyl.

The term "aryl" refers to an aromatic radical composed entirely of carbon atoms and hydrogen atoms. When aryl is described in connection with a numerical range of carbon atoms, it should not be construed as including substituted aromatic radicals. For example, the phrase "aryl containing from 6 to 10 carbon atoms" should be construed as referring to a phenyl group (6 carbon atoms) or a naphthyl group (10 carbon atoms) only, and should not be construed as including a methylphenyl group (7 carbon atoms). It should be noted that aryl is a subset of aromatic.

The term "cycloaliphatic" refers to an array of atoms which is cyclic but which is not aromatic. The cycloaliphatic group may include heteroatoms such as nitrogen, sulfur, selenium, silicon and oxygen in the ring, or may be composed exclusively of carbon and hydrogen. A cycloaliphatic group may comprise one or more noncyclic components. For example, a cyclohexylmethyl group (C₆H₁₁CH₂-) is a cycloaliphatic functionality, which comprises a cyclohexyl ring (the array of atoms which is cyclic but which is not aromatic) and a methylene group (the noncyclic component). Cycloaliphatic groups may be substituted or unsubstituted. Exemplary cycloaliphatic groups include, but are not limited to, cyclopropyl, cyclobutyl, 1,1,4,4-tetramethylcyclobutyl, piperidinyl, and 2,2,6,6-tetramethylpiperydinyl.

The term "cycloalkyl" refers to an array of atoms which is cyclic but is not aromatic, and which is composed exclusively of carbon and hydrogen. Cycloalkyl groups may be substituted or unsubstituted. It should be noted that cycloalkyl is a subset of cycloaliphatic.

In the definitions above, the term "substituted" refers to at least one hydrogen atom on the named radical being substituted with another functional group, such as alkyl, halogen, -OH, -CN, -NO₂, -COOH, etc.

The term "perfluoroalkyl" refers to a linear or branched array of atoms that is composed exclusively of carbon and fluorine.

The term "room temperature" refers to a temperature of 23°C.

The "yellowness index" (YI) is measured according to ASTM D1925. This method of measuring colors is done using the CIELAB color space. This color space uses three dimensions, L*, a*, and b*. L* is the lightness or L-value, and can be used as a measure of the amount of light transmission through the polycarbonate resin. The values for L* range from 0 (black) to 100 (diffuse white). The dimension a* is a measure of the color between magenta (positive values) and green (negative values). The dimension b* is a measure of the color between yellow (positive values) and blue (negative values), and may also be referred to as measuring the blueness of the color or as the b-value. The absorption spectrum is measured on a plaque having a thickness of 2.5 millimeters (mm) or 5.0 mm, using wavelengths between 400 nanometers (nm) and 700 nm.

The polycarbonate compositions of the present disclosure have a combination of low yellowness (reduced color) and long lifetime stability. The polycarbonate compositions of the present disclosure include (A) a polycarbonate polymer formed by a melt process; (B) a pentaerythritol diphosphite stabilizer; and optionally (C) a phenolic antioxidant. It was surprisingly found that certain combinations of stabilizer and antioxidant resulted in polycarbonate compositions having high color stability and long lifetime in terms of degradation of the polycarbonate.

The polycarbonate compositions of the present disclosure include a polycarbonate polymer (A). As used herein, the terms "polycarbonate" and "polycarbonate polymer" mean a polymer having repeating structural carbonate units of the formula (1): 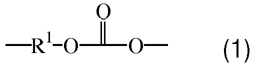 in which at least about 60 percent of the total number of R¹ groups are aromatic organic radicals and the balance thereof are aliphatic, alicyclic, or aromatic radicals. An ester unit (-COO-) is not considered a carbonate unit, and a carbonate unit is not considered an ester unit. In one embodiment, each R¹ is an aromatic organic radical, for example a radical of the formula (2):

-A¹-Y¹-A²- (2)

wherein each of A¹ and A² is a monocyclic divalent aryl radical and Y¹ is a bridging radical having one or two atoms that separate A¹ from A². In an exemplary embodiment, one atom separates A¹ from A². Illustrative non-limiting examples of radicals of this type are -O-, -S-, -S(O)-, -S(O₂)-, -C(O)-, methylene, cyclohexyl-methylene, 2-[2.2.1]-bicycloheptylidene, ethylidene, isopropylidene, neopentylidene, cyclohexylidene, cyclopentadecylidene, cyclododecylidene, and adamantylidene. The bridging radical Y¹ may be a hydrocarbon group or a saturated hydrocarbon group such as methylene, cyclohexylidene, or isopropylidene.

Polycarbonates may be produced by the reaction of dihydroxy compounds having the formula HO-R¹-OH, wherein R¹ is as defined above. Suitable dihydroxy compounds include those of formula (3)

HO-A¹-Y¹-A²-OH (3)

wherein Y¹, A¹ and A² are as described above. Also included are bisphenol compounds of general formula (4): 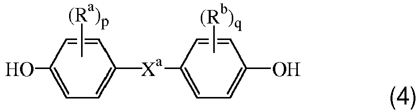 wherein R^{a} and R^{b} each represent a halogen atom or a monovalent hydrocarbon group and may be the same or different; p and q are each independently integers of 0 to 4; and X^{a} represents one of the groups of formula (5): 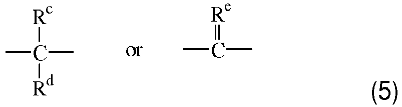 wherein R^{c} and R^{d} each independently represent a hydrogen atom or a monovalent linear or cyclic hydrocarbon group and R^{e} is a divalent hydrocarbon group.

Various types of bisphenol compounds may beused in making polycarbonate; however, the compounds must be capable of being used under melt polymerization conditions. Bisphenols represented by formula (3) include one or more of the following: 1,1-bis(4-hydroxyphenyl) methane, 1,1-bis(4-hydroxyphenyl) ethane, 2,2-bis(4-hydroxyphenyl) propane (hereinafter "bisphenol-A" or "BPA"), 2,2-bis(4-hydroxyphenyl) butane, 2,2-bis(4-hydroxyphenyl) octane, 1,1-bis(4-hydroxyphenyl) propane, 1,1-bis(4-hydroxyphenyl) n-butane, 2,2-bis(4-hydroxy-1-methylphenyl) propane, 1,1-bis(4-hydroxy-t-butylphenyl) propane, and 2-phenyl-3,3-bis(4-hydroxyphenyl) phthalimidine ("PPPBP").

In other embodiments, branching agents may be added during melt polymerization of the polycarbonate. These branching agents include polyfunctional organic compounds containing at least three functional groups selected from hydroxyl, carboxyl, carboxylic anhydride, haloformyl, and mixtures of the foregoing functional groups. Specific examples include trimellitic acid, trimellitic anhydride, trimellitic trichloride, tris-p-hydroxy phenyl ethane (THPE), isatin-bis-phenol, tris-phenol TC (1,3,5-tris((p-hydroxyphenyl)isopropyl)benzene), tris-phenol PA (4(4(1,1-bis(p-hydroxyphenyl)-ethyl) alpha, alpha-dimethyl benzyl)phenol), 4-chloroformyl phthalic anhydride, trimesic acid, and benzophenone tetracarboxylic acid. The branching agents may be added at a level of about 0.05 wt% to about 2.0 wt%.

"Polycarbonate" and "polycarbonate polymer" as used herein further includes blends of polycarbonates with other copolymers comprising carbonate chain units. An exemplary copolymer is a polyester carbonate, also known as a copolyester-polycarbonate. Such copolymers further contain, in addition to recurring carbonate chain units of the formula (1), repeating units of formula (6): 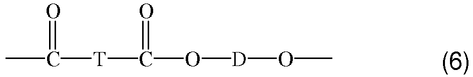 wherein D is a divalent radical derived from a dihydroxy compound, and may be, for example, a C₂₋₁₀ alkylene radical, a C₆₋₂₀ alicyclic radical, a C₆₋₂₀ aromatic radical or a polyoxyalkylene radical in which the alkylene groups contain 2 to about 6 carbon atoms, specifically 2, 3, or 4 carbon atoms; and T is a divalent radical derived from a dicarboxylic acid, and may be, for example, a C₂₋₁₀ alkylene radical, a C₆₋₂₀ alicyclic radical, a C₆₋₂₀ alkyl aromatic radical, or a C₆₋₂₀ aromatic radical. In other embodiments, dicarboxylic acids that contain a C4-C36 alkylene radical may be used to form copolymers of formula (6). Examples of such alkylene radicals include adipic acid, sebacic acid, or dodecanoic acid.

In one embodiment, D is a C₂₋₆ alkylene radical. In another embodiment, D is derived from an aromatic dihydroxy compound of formula (7): 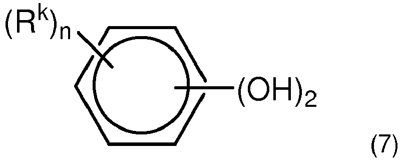 wherein each R^{k} is independently a C₁₋₁₀ hydrocarbon group, and n is 0 to 4. The halogen is usually bromine. Examples of compounds that may be represented by the formula (7) include resorcinol, substituted resorcinol compounds such as 5-methyl resorcinol, 5-phenyl resorcinol, 5-cumyl resorcinol, or the like; catechol; hydroquinone; substituted hydroquinones such as 2-methyl hydroquinone, 2-t-butyl hydroquinone, 2-phenyl hydroquinone, 2-cumyl hydroquinone, 2,3,5,6-tetramethyl hydroquinone, or the like; or combinations comprising at least one of the foregoing compounds.

Examples of aromatic dicarboxylic acids that may be used to prepare the polyesters include isophthalic or terephthalic acid, 1,2-di(p-carboxyphenyl)ethane, 4,4'-dicarboxydiphenyl ether, 4,4'-bisbenzoic acid, and mixtures comprising at least one of the foregoing acids. Acids containing fused rings can also be present, such as in 1,4-, 1,5-, or 2,6-naphthalenedicarboxylic acids. Specific dicarboxylic acids are terephthalic acid, isophthalic acid, naphthalene dicarboxylic acid, cyclohexane dicarboxylic acid, or mixtures thereof.

In other embodiments, poly(alkylene terephthalates) may be used. Specific examples of suitable poly(alkylene terephthalates) are poly(ethylene terephthalate) (PET), poly(1,4-butylene terephthalate) (PBT), poly(ethylene naphthanoate) (PEN), poly(butylene naphthanoate), (PBN), (polypropylene terephthalate) (PPT), polycyclohexanedimethanol terephthalate (PCT), and combinations comprising at least one of the foregoing polyesters.

Copolymers comprising alkylene terephthalate repeating ester units with other ester groups may also be useful. Useful ester units may include different alkylene terephthalate units, which can be present in the polymer chain as individual units, or as blocks of poly(alkylene terephthalates). Specific examples of such copolymers include poly(cyclohexanedimethylene terephthalate)-co-poly(ethylene terephthalate), abbreviated as PETG where the polymer comprises greater than or equal to 50 mol% of poly(ethylene terephthalate), and abbreviated as PCTG where the polymer comprises greater than 50 mol% of poly(1,4-cyclohexanedimethylene terephthalate).

Poly(cycloalkylene diester)s may also include poly(alkylene cyclohexanedicarboxylate)s. Of these, a specific example is poly(1,4-cyclohexanedimethanol-1,4-cyclohexanedicarboxylate) (PCCD), having recurring units of formula (8): 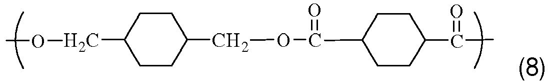 wherein, as described using formula (6), R² is a 1,4-cyclohexanedimethylene group derived from 1,4-cyclohexanedimethanol, and T is a cyclohexane ring derived from cyclohexanedicarboxylate or a chemical equivalent thereof, and may comprise the cis-isomer, the trans-isomer, or a combination comprising at least one of the foregoing isomers.

Also included in the phrase "polycarbonate polymer" are polycarbonate-polysiloxane copolymers. These copolymers comprise polycarbonate blocks and polydiorganosiloxane blocks. The polycarbonate blocks in the copolymer comprise repeating structural units of formula (1) as described above, for example wherein R¹ is of formula (2) as described above. These units may be derived from reaction of dihydroxy compounds of formula (3) as described above.

The polydiorganosiloxane blocks comprise repeating structural units of formula (9) (sometimes referred to herein as 'siloxane'): 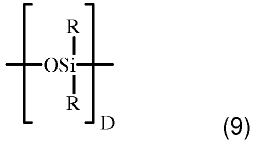 wherein each occurrence of R is same or different, and is a C₁₋₁₃ monovalent organic radical. For example, R may be a C₁-C₁₃ alkyl group, C₁-C₁₃ alkoxy group, C₂-C₁₃ alkenyl group, C₂-C₁₃ alkenyloxy group, C₃-C₆ cycloalkyl group, C₃-C₆ cycloalkoxy group, C₆-C₁₀ aryl group, C₆-C₁₀ aryloxy group, C₇-C₁₃ aralkyl group, C₇-C₁₃ aralkoxy group, C₇-C₁₃ alkaryl group, or C₇-C₁₃ alkaryloxy group. Combinations of the foregoing R groups may be used in the same copolymer. Generally, D may have an average value of 2 to about 1000, specifically about 2 to about 500, more specifically about 5 to about 200, and more specifically about 10 to about 75. Where D is of a lower value, e.g., less than about 40, it may be desirable to use a relatively larger amount of the polycarbonate-polysiloxane copolymer. Conversely, where D is of a higher value, e.g., greater than about 40, it may be necessary to use a relatively lower amount of the polycarbonate-polysiloxane copolymer. It should be noted that the siloxane blocks in a polycarbonate-polysiloxane copolymer have a distribution of chain lengths, and that D is an average value.

In one embodiment, the polydiorganosiloxane blocks are provided by repeating structural units of formula (10): 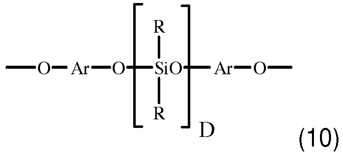 wherein D is as defined above; each R may be the same or different, and is as defined above; and Ar may be the same or different, and is a substituted or unsubstituted C₆-C₃₀ arylene radical, wherein the bonds are directly connected to an aromatic moiety. Suitable Ar groups in formula (10) may be derived from a C₆-C₃₀ dihydroxyarylene compound, for example a dihydroxyarylene compound of formula (3), (4), or (7) above. Combinations comprising at least one of the foregoing dihydroxyarylene compounds may also be used.

Such units may be derived from the corresponding dihydroxy compound of the following formula (11): 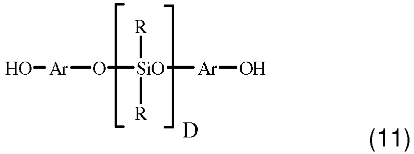 wherein Ar and D are as described above. Compounds of this formula may be obtained by the reaction of a dihydroxyarylene compound with, for example, an alpha, omega-bisacetoxypolydiorangonosiloxane under phase transfer conditions.

In another embodiment the polydiorganosiloxane blocks comprise repeating structural units of formula (12): 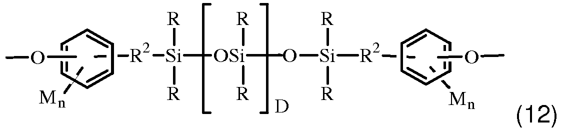 wherein R and D are as defined above. R² in formula (12) is a divalent C₂-C₈aliphatic group. Each M in formula (12) may be the same or different, and may be cyano, nitro, C₁-C₈ alkylthio, C₁-C₈ alkyl, C₁-C₈ alkoxy, C₂-C₈ alkenyl, C₂-C₈ alkenyloxy group, C₃-C₈ cycloalkyl, C₃-C₈ cycloalkoxy, C₆-C₁₀ aryl, C₆-C₁₀ aryloxy, C₇-C₁₂ aralkyl, C₇-C₁₂ aralkoxy, C₇-C₁₂ alkaryl, or C₇-C₁₂ alkaryloxy, wherein each n is independently 0, 1, 2, 3, or 4.

In one embodiment, M is an alkyl group such as methyl, ethyl, or propyl, an alkoxy group such as methoxy, ethoxy, or propoxy, or an aryl group such as phenyl, or tolyl; R² is a dimethylene, trimethylene or tetramethylene group; and R is a C₁₋₈ alkyl, haloalkyl such as trifluoropropyl, cyanoalkyl, or aryl such as phenyl or tolyl. In another embodiment, R is methyl, or a mixture of methyl and phenyl. In still another embodiment, M is methoxy, n is one, R² is a divalent C₁-C₃ aliphatic group, and R is methyl.

These units may be derived from the corresponding dihydroxy polydiorganosiloxane (13): 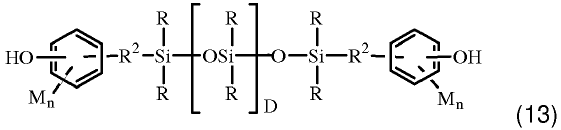 wherein R, D, M, R², and n are as described above.

Such dihydroxy polysiloxanes can be made by effecting a platinum catalyzed addition between a siloxane hydride of the formula (14), 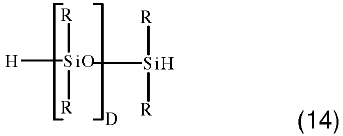 wherein R and D are as previously defined, and an aliphatically unsaturated monohydric phenol. Suitable aliphatically unsaturated monohydric phenols included, for example, eugenol, 2-alkylphenol, 4-allyl-2-methylphenol, 4-allyl-2-phenylphenol, 4-allyl-2-t-butoxyphenol, 4-phenyl-2-phenylphenol, 2-methyl-4-propylphenol, 2-allyl-4,6-dimethylphenol, 2-allyl-6-methoxy-4-methylphenol and 2-allyl-4,6-dimethylphenol. Mixtures comprising at least one of the foregoing may also be used.

The siloxane blocks may make up from greater than zero to about 25 wt% of the polycarbonate-polysiloxane copolymer, including from 4 wt% to about 25 wt%, from about 4 wt% to about 10 wt%, or from about 15 wt% to about 25 wt%, or from about 6 wt% to about 20 wt%. The polycarbonate blocks may make up from about 75 wt% to less than 100 wt% of the block copolymer, including from about 75 wt% to about 85 wt%. It is specifically contemplated that the polycarbonate-polysiloxane copolymer is a diblock copolymer. The polycarbonate-polysiloxane copolymer may have a weight average molecular weight of from about 28,000 to about 32,000. Generally, the amount of the polycarbonate-polysiloxane copolymer is sufficient for the overall polycarbonate blend to contain from about 2 wt% to about 5 wt% of siloxane. For example, if the polycarbonate-polysiloxane copolymer contains 20 wt% of siloxane, the blend may contain from about 14 to about 24 wt% of the polycarbonate-polysiloxane copolymer.

The polycarbonates (A) generally include an endcapping agent. The endcapping agent can be a phenol, such as tert-butylphenol (TBP) or paracumyl phenol (PCP), or other similar compounds known in the art.

In specific embodiments of the present disclosure, the polycarbonate polymer (A) is derived from a dihydroxy compound having the structure of Formula (I): 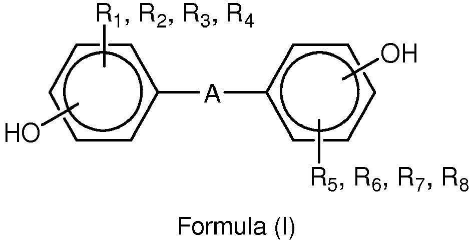 wherein R₁ through R₈ are each independently selected from hydrogen,nitro, cyano, C₁-C₂₀ alkyl, C₄-C₂₀ cycloalkyl, and C₆-C₂₀ aryl; and A is selected from a bond, -O-, -S-, -SO₂-, C₁-C₁₂ alkyl, C₆-C₂₀ aromatic, and C₆-C₂₀ cycloaliphatic.

In specific embodiments, the dihydroxy compound of Formula (I) is 2,2-bis(4-hydroxyphenyl) propane (i.e. bisphenol-A or BPA). Other illustrative compounds of Formula (I) include: 2,2-bis(4-hydroxy-3-isopropylphenyl)propane; 2,2-bis(3-t-butyl-4-hydroxyphenyl)propane; 2,2-bis(3-phenyl-4-hydroxyphenyl)propane; 1,1-bis(4-hydroxyphenyl)cyclohexane; 4,4'dihydroxy-1,1-biphenyl; 4,4'-dihydroxy-3,3'-dimethyl-1,1-biphenyl; 4,4'-dihydroxy-3,3 '-dioctyl-1,1 -biphenyl; 4,4'-dihydroxydiphenylether; 4,4'-dihydroxydiphenylthioether; and 1,3 -bis(2-(4-hydroxyphenyl)-2-propyl)benzene.

In more specific embodiments, the polycarbonate polymer (A) is a bisphenol-A homopolymer produced by the melt process. The polycarbonate polymer may have a weight average molecular weight (Mw) of from about 15,000 to about 70,000 daltons, according to polycarbonate standards based on GPC, including a range of from about 15,000 to about 22,000 daltons.

In other embodiments, the composition can contain a linear and branched polycarbonate resin, however, at least one resin must be derived from a melt polycarbonate process.

In some embodiments of the present disclosure, the polycarbonate composition includes two or more polycarbonate polymers, i.e. a first polycarbonate polymer (A1) and a second polycarbonate polymer (A2). The two polycarbonate polymers may have the same or different monomers. In one embodiment, the first polycarbonate polymer has a greater weight average molecular weight than the first polycarbonate polymer.

The polycarbonates (A) of the present disclosure are manufactured by melt polymerization. Melt polymerization of polycarbonates is well known the art and can be made without undue experimentation. Generally, in the melt polymerization process, polycarbonates may be prepared by co-reacting, in a molten state, the dihydroxy reactant(s) and a diaryl carbonate ester, such as diphenyl carbonate, in the presence of a transesterification catalyst in a Banbury® mixer, twin screw extruder, or the like to form a uniform dispersion. Volatile monohydric phenol is removed from the molten reactants by distillation and the polymer is isolated as a molten residue.

In further embodiments, a quenching agent is added to affect the color stability of the polycarbonate produced by a melt polymerization process. A quenching agent inhibits the activity of any residual catalyst that may be present in the polycarbonate and reduces degradation of the polycarbonate. The quenching agent can be added after the reaction of the polycarbonate is completed, or can be added to an intermediate polycarbonate prior to subjecting the reaction mixture to high temperature and high vacuum for the removal of byproduct phenol, unreacted monomer, and short oligomers. Preferably, the quenching agent provides a transparent/translucent and colorless product.

Quenching agents can include materials that are sometimes used as stabilizers. Suitable quenching agents can include molecules having both at least one amino group and at least one acid group or acid ester group. The acid / acid ester group can be a Lewis acid, Bronsted acid, or an ester of a strong acid. The amino group can be primary secondary, tertiary, or quaternary ammonium. Examples of such molecules include N-(2-hydroxyethyl)piperazine-N'-3-propanesulfonic acid; 1,4-piperazine bis(ethanesulfonic acid); and 5-dimethylamino-1-napthalenesulfonic acid. Other suitable quenching agents can include sulfonic acid esters, such as n-butyl tosylate; benzoic anhydride, benzoic acid, triethyl ortho acetate, tosylic acid; a Bronsted acid, Lewis acid, and an ester of a strong acid.

Examples of suitable Bronsted acid compounds include phosphoric acid, phosphorous acid, hypophosphorous acid, pyrophosphoric acid, poly-phosphoric acid, boric acid, hydrochloric acid, hydrobromic acid, sulfuric acid, sulfurous acid, adipic acid, azelaic acid, dodecanoic acid, L-ascorbic acid, aspartic acid, benzoic acid, benzoic anhydride, formic acid, acetic acid, citric acid, glutamic acid, salicyclic acid, nicotic acid, fumaric acid, maleic acid, oxalic acid, benzene-sulfinic acid, toluenesulfinic acid, and sulfonic acids such as benzenesulfonic acid, p-toluenesulfonic acid, trifluoromethane sulfonic acid, naphthalene napthalene sulfonic acid, sulfonated polystyrene, and methyl acrylate-sulfonated styrene copolymer.

Examples of suitable esters of strong acids include compounds such as dimethyl sulfonate, triethyl ortho acetate, diethyl sulfonate, methyl, ethyl, butyl, octyl or phenyl ester of p-toluenesulfonic acid, and methyl, ethyl, butyl, octyl or phenyl ester of benzenesulfonic acid.

Other suitable transesterification quenchers include acidic phosphate salts, acid phosphites, alkyl phosphites, aryl phosphites, mixed phosphites; mono-and di-hydrogen phosphonates and their metal salts; and pyrophosphates and their metal salts. Acidic phosphate salts include sodium dihydrogen phosphate, mono zinc phosphate, potassium hydrogen phosphate, calcium dihydrogen phosphate, and the like. Other examples include phosphoric acid, transition metal phosphates, zinc phosphate, monozinc phosphate, calcium phosphate, phosphoric acid, and phosphorous acid.

The quenching agent can be used in a powder carrier or in a non-powder carrier, such as liquid carrier or solid pellets containing the quenching agent. Exemplary liquid carriers can include propylene carbonate, anisole, toluene, melted pentaerythritol tetrastearate (PETS), and glycerol monostearate (GMS).

The catalyst quenching agent may be employed in amounts of about 0.05 ppm to about 100 ppm based on the total weight of the polycarbonate. Within this range it is preferable for the catalyst quenching agent to be used in an amount less than or equal to about 50 ppm, more preferably less than or equal to about 10 ppm. Also within this range it is preferable for the catalyst quenching agent to be used in an amount greater than or equal to about 0.1 ppm, more preferably greater than or equal to about 0.5 ppm.

Polycarbonate prepared by melt polymerization frequently contains Fries product. The Fries rearrangement is an undesirable side reaction that occurs during the preparation of polycarbonate using the melt process. Generally, a Fries rearrangement occurs when an aryl carbonate group rearranges to become a hydroxyl-substituted phenyl salicylate ester. The hydroxyl group can then undergo polymerization, and serves as a site for branching of the polycarbonate, which affects flow and other properties of the polycarbonate. Although low levels of Fries products may be tolerated in polycarbonates, the presence of high levels is generally undesirable because it leads to variations in melt behavior, color and mechanical properties, and can lead to darkening of the resin over time. The level of Fries product can be calculated by measuring the total Fries product content on a mass percentage basis of the polycarbonate by hydrolysis to yield monomer units, followed by methanolysis of all Fries containing units and subsequent high-performance liquid chromatography (HPLC) measurement. The mole ratio of branched to unbranched is measured by NMR. The content of branched Fries products is thus the total Fries products multipled by this mole ratio.

The polycarbonate compositions of the present disclosure also include a pentaerythritol diphosphite stabilizer (B). These stabilizers have the structure of Formula (A): 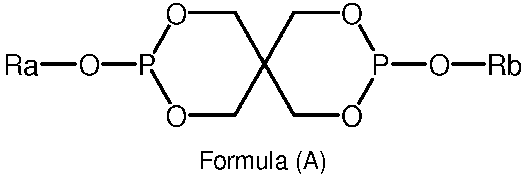 wherein Ra and Rb are arylalkyl or arylalkylaryl.

The term "arylalkyl" refers to an aryl radical substituted with at least one alkyl radical. An example of an arylalkyl radical is tert-butyl-phenyl, -C₆H₅-C(CH₃)₃.

The term "arylalkylaryl" refers to an aryl radical substituted with at least one alkyl radical that itself is substituted with at least one aryl radical. An example of an arylalkylaryl radical is 2,4-dicumylphenyl.

In more particular embodiments, the stabilizer has a melting point of greater than 200°C. These stabilizers are suitable for use in the melt polymerization process. An exemplary pentaerythritol diphosphite stabilizer is bis(2,4-dicumylphenyl) pentaerythritol diphosphite, CAS# 154862-43-8, which is offered commercially as DOVERPHOS S-9228, and has a minimum melting point of 225°C. The pentaerythritol diphosphite stabilizer may be used in the composition in amounts of 25 ppm to 1000 ppm (mass fraction) relative to the polycarbonate polymer (A), including from 200 ppm to 1000 ppm or from 400 ppm to 700 ppm.

The polycarbonate compositions of the present disclosure can also include an antioxidant (C), which is a phenolic antioxidant. The phenolic antioxidant may contain any number of phenolic groups, for example one, two, three, or four phenolic groups. Usually, the phenolic antioxidant is a hindered phenol. Examples of suitable antioxidants include those listed in Table A:

**Table A.**

| **Commercial Name** | **CAS #** | **Systematic Name** | **m.p. (°C)** |
|---|---|---|---|
| IRGANOX 1076 | 2082-79-3 | octadecyl 3-(3,5-di-tert-butyl-4-hydroxyphenyl)propionate | 241 |
| SONGNOX 1790 | 040601-76-1 | 1,3,5-tris(4-tert-butyl-3-hydroxy-2,6-dimethyl benzyl) isocyanurate | 159-162 |
| HOSTANOX 03 | 32509-66-3 | bis[3,3-bis-(4'-hydroxy-3'-tert-butylphenyl)butanoicacid]-glycol ester | 167-171 |

When present, the antioxidant may be used in the composition in amounts of 50 ppm to 1000 ppm (mass fraction) relative to the polycarbonate polymer (A), including from 75 ppm to 700 ppm. In specific embodiments, only one antioxidant selected from the list shown in Table A is present in the polycarbonate composition. The weight ratio of the pentaerythritol diphosphite stabilizer to the antioxidant may be from 1:1 to 6:1.

In some desirable embodiments, the polycarbonate compositions of the present disclosure can also include another phosphite antioxidant (D), which is different from the pentaerythritol diphosphite stabilizer (B). In more particular embodiments, this second additional phosphite antioxidant (D) is not a pentaerythritol diphosphite. Exemplary phosphite antioxidants include, for example, tris(nonyl phenyl)phosphite, tris(2,4-di-t-butylphenyl)phosphite (e.g., "IRGAFOS 168" or "I-168"), triphenyl phosphite, tris-(2,6-dimethylphenyl)phosphite, and tris-(mixed mono-and di-nonylphenyl)phosphite. The phosphite antioxidant (D) may be used in the composition in amounts of 25 ppm to 1000 ppm (mass fraction) relative to the polycarbonate polymer (A), including from 200 ppm to 1000 ppm or from 75 ppm to 700 ppm.

In particular embodiments, it is contemplated that the polycarbonate composition will comprise the polycarbonate polymer (A), the pentaerythritol diphosphite stabilizer (B), and the phosphite antioxidant (D), but not necessarily the phenolic antioxidant (C). Other contemplated embodiments include the polycarbonate polymer (A), the pentaerythritol diphosphite stabilizer (B), the phenolic antioxidant (C), and the phosphite antioxidant (D).

Other additives ordinarily incorporated in polycarbonate blends of this type can also be used, with the proviso that the additives are selected so as to not significantly adversely affect the desired properties of the polycarbonate. Combinations of additives can be used. Such additives can be mixed at a suitable time during the mixing of the components for forming the composition. In embodiments, one or more additives are selected from at least one of the following: mold release agents, gamma-stabilizing agents, and anti-drip agents.

The polycarbonate produced by the melt process can have a melt volume rate (MVR) of 3 to 56 cc/10 min when measured according to ASTM D1238. The endcap percentage may be from 65% to 90%. The Fries content can range from 200 ppm to 2750 ppm, including from 300 ppm to 1000 ppm.

The polycarbonate compositions of the present disclosure have low yellowness, as measured by the yellowness index (YI) according to ASTM D1925 on a plaque at 2.5 mm thickness. In embodiments, the polycarbonate compositions have a YI of 3.0 or less, including a YI of 2.5 or less, or a YI of 2.0 or less.

In some embodiments, the yellowness index of the composition remains below 10 after being baked at 250°C for a period of 60 minutes. In other embodiments, wherein the yellowness index of the composition increases by less than 100% after being baked at 250°C for a period of 60 minutes. In yet other embodiments, wherein the yellowness index of the composition increases by less than 200% after being baked at 250°C for a period of 120 minutes.

The polycarbonate compositions of the present disclosure have light transmission, as measured according to ASTM D1003 on a plaque at 2.5 mm thickness. In embodiments, the polycarbonate compositions have a light transmission (%LT) of 90% or higher, including 95% or higher.

The polycarbonate compositions of the present disclosure may have any combination of these properties (MVR, endcap percentage, Fries, YI, %LT), and any combination of the listed values for these properties. It should be noted that some of the properties are measured using articles made from the polycarbonate composition; however, such properties are described as belonging to the polycarbonate composition for ease of reference.

The polycarbonate compositions of the present disclosure may be molded into pellets. The compositions may be molded, foamed, or extruded into various structures or articles by known methods, such as injection molding, overmolding, extrusion, rotational molding, blow molding and thermoforming.

The following examples are provided to illustrate the polycarbonate compositions of the present disclosure. The examples are merely illustrative and are not intended to limit the disclosure to the materials, conditions, or process parameters set forth therein.

### EXAMPLES

### METHODS

Table 1 lists the names and descriptions of the ingredients used in the following Examples.

**Table 1.**

| **Ingredient** | **Description** | **Mw** | **Trade name** | **Source** |
|---|---|---|---|---|
| PC 102 | Bisphenol-A homopolymer made by melt polymerization | 58,000-61,000 as measured by GPC-polystyrene standards | | SABIC Innovative Plastics |
| I-168 | Phosphite stabilizer | | IRGAFOS 168 | |
| DS-9228 | Diphosphite stabilizer | | DOVERPHOS S-9228 | |
| AO 1076 | Phenolic antioxidant | | I RGANOX 1076 | |
| AO 1790 | Phenolic antioxidant | | SONGNOX 1790 | |
| AO HTXO3 | Phenolic antioxidant | | HOSTANOX 03 | |

Samples were prepared through various steps, which include (A) extrusion, (B) drying, (C) injection molding, (D) heat aging, and (E) color measurement. Detailed compound formulations from several experimental runs are illustrated in Examples 1, 2, 3, and 4 respectively. The corresponding YI results from these compounds are illustrated in Figures 1, 2, 3, and 4 respectively. Tables 2-6 list the amount of stabilizer and antioxidant used in units of ppm.

### (A) Extrusion

Samples were extruded using a Coperion extruder ZSK26M co-rotating twin screw with a diameter of 26mm. The screw speed was set to 300 rpm. Samples were fed into the extruder by 4 K-Tron feeders (two single screw, a twin screw and a tray, all gravimetric). The barrel temperature in the zones was set to 260/270/280/290/300/300/300°C, with a die temperature of 290°C.

### (B) Drying

Extruded components were next dried using a Langbein Amboss pellets dryer (Model WTS20 3B) for 2 hours at a temperature of approximately 120 °C.

### (C) Injection Molding

Dried extruded components were next injection molded using an Engel Victory 120 with a clamp force of 120 MT, and an injection screw of 40 mm in diameter maximum injection volume 200 cm³, without columns (Tie-bar-less). Injection moulding occurred at a temperature of 290/300/300 °C with a nozzle temperature of 290 °C. The injection speed was 0.368 meters/sec. The holding pressure was 28.4 bar (10 seconds). The mold temperature was approximately 90°C. Cooling time was approximately 20 seconds.

### (D) Heat Aging

injection molded 2.5mm color plaques were placed in an air circulating oven at 120°C for an extended period of time. The plaques stayed there for up to 2000 hours and color was measured after 100, 300, 500, 1000, 1500, and 2000 hours.

### (E) Color Measurement

Color values (L*, a*, b* and YI) were calculated from the absorption spectrum of a 2.5 mm or 5.0 mm color plaque between 400 nm and 700 nm. The spectrum was measured on a XRITE Color i7 device in transmission mode and UV excluded. The YI (yellowness index) values used in this report have been calculated according the ASTM D1925 method.

Light transmission and haze were measured on the 2.5mm color plaques using a Byk Gardner Dual Hazeguard. The light transmission and haze were measured according the ASTM D1003 method.

As seen in the following Examples 3, 4, 5, and 6, it has been observed that generally the Doverphos 9228 has had a decreasing effect on the YI of the plaques in comparison to Irgafos 168. This effect is also noticeable when the phosphites are combined with the primary phenolic AO's and again the resultant plaque YI's are lower.

### Example 1

With reference to Table 2 and **FIG. 1**, plaques including PC102 and the following combinations of phosphite stabilizer and DS-9228 were made in the amounts shown. The presence of Doverphos-9228 diphosphite stabilizer resulted in a YI noticeably reduced compared to the use of I-168 or A1076 alone. Furthermore, as shown in (4) and (5), Doverphos-9228 in combination with AO 1076 surprisingly reduced the YI more than when using I-168 stabilizer.

**Table 2.**

| | **I-168** | **DS-9228** | **AO 1076** |
|---|---|---|---|
| **1** | | | 300 |
| **2** | 400 | | |
| **3** | | 400 | |
| **4** | 400 | | 200 |
| **5** | | 400 | 200 |

### Example 2

With reference to Table 3 and FIG. 2, the combination of DS-9228 and AO HTXO3 had a yellowness index (YI) slightly greater than 2.5, while the combination of I-168 and AO HTXO3 had a YI slightly less than 4.5. The use of DS-9228 diphosphite stabilizer instead of monophosphite I-168 had nearly a 100% relative improvement in YI.

**Table 3.**

| | **I- 168** | **DS-9228** | **AO HTXO3** |
|---|---|---|---|
| **1** | 400 | | 300 |
| **2** | | 400 | 300 |
| **3** | | | 300 |

### Example 3

With reference to Table 4 and FIG. 3, the polycarbonate compositions were subjected to a cookie test. The cookie test was a simple heat aging test in which the polycarbonate compositions were placed in an aluminum baking tray used for cookie baking. The trays were placed in an oven with temperature of 250°Celsius. The molten polycarbonate compositions at the bottom of the tray eventually formed a rounded plaque, and the yellowness index of this plaque was measured at specified periods. The color degradation of the polymer (lack of color stability) is measured by the degree of YI change after 30, 60, and 120 minutes.

As seen in FIG. 3, combination (4) containing DS-9228 phosphite stabilizer was superior to all other tested combinations (1-3) in both the magnitude of YI and rate of YI increase after 30, 60, and 120 minutes. The rate of YI increase appeared to slow down in combination 4 between 60 and 120 minutes, while at least in combinations (1) and (2), the rate of YI increase between 30, 60, and 120 minutes appeared to be steady.

**Table 4.**

| | **I- 168** | **DS-9228** | **AO 1790** |
|---|---|---|---|
| **1** | | | 75 |
| **2** | 400 | | 75 |
| **3** | 400 | | 150 |
| **4** | | 400 | 75 |

### Example 4

With reference to Table 5 and FIG. 4, many different combinations and varying amounts of stabilizer and antioxidant were used. The combinations that contained the Doverphos DS-9228 diphosphite stabilizer with 300 pm phenolic antioxidant had improved YI relative to the combinations containing the I-168 monophosphite stabilizer. This improvement was almost an entire unit on the YI scale. As seen in FIG. 4, the lowest YI value (below 2.0) was reached with the use of only DS-9228 stabilizer.

**Table 5.**

| | **I-168** | **DS-9228** | **AO1076** | **HXO3** |
|---|---|---|---|---|
| **0** | | | | |
| **1** | 400 | | 300 | |
| **2** | 400 | | | 300 |
| **3** | | 400 | 300 | |
| **4** | | 400 | | 300 |
| **5** | 700 | | | |
| **6** | | 700 | | |
| **7** | | | 700 | |
| **8** | | | | 700 |

Set forth below are some embodiments of the polycarbonate composition, and articles comprising the same.

Embodiment 1: A polycarbonate composition, comprising: a polycarbonate polymer formed by a melt process; and a pentaerythritol diphosphite stabilizer; wherein the composition has a yellowness index (YI) of 3 or less when measured according to ASTM D1925 at 2.5 mm thickness; a light transmission of 90% or greater when measured according to ASTM D1003 at 2.5 mm thickness; a melt volume rate of 3 to 56 cc/10 min, when measured according to ASTM D1238; an endcap percentage of 65% to 90%; and a Fries content of from 200 ppm to 2750 ppm.

Embodiment 2: A polycarbonate composition, comprising: a polycarbonate polymer formed by a melt process; and a pentaerythritol diphosphite stabilizer.

Embodiment 3: The composition of any of Embodiments 1-2, further comprising a phenolic antioxidant.

Embodiment 4: The composition of Embodiment 3, wherein the phenolic antioxidant is octadecyl 3-(3,5-di-tert-butyl-4-hydroxyphenyl)propionate, 1,3,5-tris(4-tert-butyl-3-hydroxy-2,6-dimethylbenzyl)-1,3,5-triazine-2,4,6-(1H,3H,5H)-trione, or bis[3,3-bis-(4'-hydroxy-3'-tert-butylphenyl) butanoic acid]-glycol ester.

Embodiment 5: The composition of Embodiment 3, wherein the phenolic antioxidant is octadecyl 3-(3,5-di-tert-butyl-4-hydroxyphenyl)propionate, 1,3,5-tris(4-tert-butyl-3-hydroxy-2,6-dimethylbenzyl)-1,3,5-triazine-2,4,6-(1H,3H,5H)-trione, bis[3,3-bis-(4'-hydroxy-3'-tert-butylphenyl) butanoic acid]-glycol ester, or a combination comprising at least one of the foregoing.

Embodiment 6: The composition of any of Embodiments 3-5, containing from 50 ppm to 1000 ppm of the phenolic antioxidant.

Embodiment 7: The composition of any of Embodiments 3-6, wherein the weight ratio of the pentaerythritol diphosphite stabilizer to the phenolic antioxidant is from 1 to 6.

Embodiment 8: The composition of any of Embodiments 1-7, containing from 25 ppm to 1000 ppm of the pentaerythritol diphosphite stabilizer.

Embodiment 9: The composition of any of Embodiments 1-8, wherein the yellowness index remains below 10 after being baked at 250°C for a period of 60 minutes.

Embodiment 10: The composition of any of Embodiments 1-9, wherein the yellowness index increases by less than 100% after being baked at 250°C for a period of 60 minutes.

Embodiment 11: The composition of any of Embodiments 1-10, wherein the yellowness index increases by less than 200% after being baked at 250°C for a period of 120 minutes.

Embodiment 12: The composition of any of Embodiments 1-11, wherein the melt process used to form the polycarbonate polymer includes the addition of a quenching agent.

Embodiment 13: The composition of Embodiment 12, wherein the amount of the quenching agent added is about 0.05 ppm to about 100 ppm based on the total weight of the polycarbonate.

Embodiment 14: The composition of any of Embodiments 12-13, wherein the quenching agent is added along with a carrier to the polycarbonate.

Embodiment 15: The composition of any of Embodiments 12-14, wherein the quenching agent is added to the process after formation of the polycarbonate.

Embodiment 16: The composition of any of Embodiments 1-15, further comprising a phosphite antioxidant which is different from the pentaerythritol disphosphite stabilizer.

Embodiment 17: The composition of any of Embodiments 1-16, wherein the pentaerythritol diphosphite stabilizer is bis(2,4-dicumyl) pentaerythritol diphosphite.

Embodiment 18: The composition of any of Embodiments 1-17, wherein the composition has a YI of 2.5 or less.

Embodiment 19: An article molded from the polycarbonate composition of any of Embodiments 1-18.

Embodiment 20: The article of Embodiment 19, wherein the article is an automotive inner lens, a collimator lens, an LED lens, or a light guide.

The present disclosure has been described with reference to exemplary embodiments. Obviously, modifications and alterations will occur to others upon reading and understanding the preceding detailed description. It is intended that the present disclosure be construed as including all such modifications and alterations insofar as they come within the scope of the appended claims or the equivalents thereof.

## Claims

1. A polycarbonate composition, comprising:
a polycarbonate polymer formed by a melt process; and
a pentaerythritol diphosphite stabilizer;
wherein the composition has a yellowness index (YI) of 3 or less when measured according to ASTM D1925 at 2.5 mm thickness; a light transmission of 90% or greater when measured according to ASTM D1003 at 2.5 mm thickness; a melt volume rate of 3 to 56 cc/10 min, when measured according to ASTM D1238; an endcap percentage of 65% to 90%; and a Fries content of from 200 ppm to 2750 ppm.

2. The composition of claim 1, wherein the pentaerythritol diphosphite stabilizer is bis(2,4-dicumyl) pentaerythritol diphosphite.

3. The composition of any of claims 1-2, further comprising a phenolic antioxidant.

4. The composition of claim 3, wherein the phenolic antioxidant is octadecyl 3-(3,5-di-tert-butyl-4-hydroxyphenyl)propionate, 1,3,5-tris(4-tert-butyl-3-hydroxy-2,6-dimethylbenzyl)-1,3,5-triazine-2,4,6-(1H,3H,5H)-trione, or bis[3,3-bis-(4'-hydroxy-3'-tert-butylphenyl) butanoic acid]-glycol ester.

5. The composition of any of claims 3-4, containing from 50 ppm to 1000 ppm of the phenolic antioxidant.

6. The composition of any of claims 3-5, wherein the weight ratio of the pentaerythritol diphosphite stabilizer to the phenolic antioxidant is from 1 to 6.

7. The composition of any of claims 1-6, containing from 25 ppm to 1000 ppm of the pentaerythritol diphosphite stabilizer.

8. The composition of any of claims 1-7, wherein the yellowness index remains below 10 after being baked at 250°C for a period of 60 minutes.

9. The composition of any of claims 1-8, wherein the yellowness index increases by less than 100% after being baked at 250°C for a period of 60 minutes.

10. The composition of any of claims 1-9, wherein the yellowness index increases by less than 200% after being baked at 250°C for a period of 120 minutes.

11. The composition of any of claims 1-10, wherein the melt process used to form the polycarbonate polymer includes the addition of a quenching agent.

12. The composition of claim 11, wherein the amount of the quenching agent added is about 0.05 ppm to about 100 ppm based on the total weight of the polycarbonate.

13. The composition of any of claims 12-13, wherein the quenching agent is added along with a carrier to the polycarbonate, and/or wherein the quenching agent is added to the process after formation of the polycarbonate.

14. The composition of any of claims 1-13, further comprising a phosphite antioxidant which is different from the pentaerythritol disphosphite stabilizer.

15. An article molded from the polycarbonate composition of any of claims 1-14, and wherein the article is an automotive inner lens, a collimator lens, an LED lens, or a light guide.
